# EUROPEAN PATENT SPECIFICATION

(11) **EP 4 403 037 B1**
(45) Date of publication and mention of the grant of the patent: **20.08.2025**
(21) Application number: 23219001.7
(22) Date of filing: 21.12.2023
(51) Int. Cl.: A23G 9/12, A23G 9/22, A23G 9/40, A23G 9/28

(54) **STIRRER, MACHINE COMPRISING THE STIRRER FOR PROCESSING LIQUID, SEMI-LIQUID OR SEMI-SOLID FOOD PRODUCTS, AND PROCESSING METHOD**
RÜHRER, MASCHINE MIT DEM RÜHRER ZUR VERARBEITUNG VON FLÜSSIGEN, HALBFLÜSSIGEN ODER HALBFESTEN LEBENSMITTELPRODUKTEN UND VERARBEITUNGSVERFAHREN
AGITATEUR, MACHINE COMPRENANT L'AGITATEUR POUR TRAITER DES PRODUITS ALIMENTAIRES LIQUIDES, SEMI-LIQUIDES OU SEMI-SOLIDES, ET PROCÉDÉ DE TRAITEMENT

(30) Priority: 17.01.2023 IT 202300000537
(43) Date of publication of application: 24.07.2024
(73) Proprietor: Ali Group S.r.l., 20063 Cernusco sul Naviglio (MI) (IT)
(72) Inventor: LAZZARINI, Roberto, REGGIO EMILIA (IT); TASSI, Federico, BOLOGNA (IT)
(74) Representative: Milli, Simone

(56) References cited:
- EP-B1- 3 222 150
- CN-U- 202 590 682
- IT-A1- 201900 006 698
- US-A1- 2020 397 017

## Description

This disclosure relates to a stirrer and a machine for processing and treating food products (liquid and/or semi-liquid and/or semi-solid), in particular products for the bakery and confectionery trade, creams, dessert mixtures or the like and a method for processing liquid, semi-liquid or semi-solid products by means of the stirrer.

Generally speaking, these machines comprise a container for containing the product to be processed, a stirrer mounted inside the container and used for mixing the product, and at least one dispensing tap mounted at the bottom of the front of the container.

In machines of this kind, where the product to be stirred has a liquid or semi-liquid consistency, a first stirrer is used, which is provided with a shaft and vanes especially designed for stirring.

These vanes usually have contact elements made of plastic material, which allow centring the stirrer relative to the container and, at the same time, reducing friction while the stirrer rotates.

On the other hand, when the products to be stirred are creamy, in particular dessert products, a second stirrer is usually used, which is provided with vanes which are larger in surface area, hence more suitable for mixing products which are very creamy.

A particularly strongly felt need in the trade concerned is therefore to be able to have a single stirrer capable of very effectively treating liquid or semi-liquid mixtures as well as creamy desserts, and of producing particularly high product quality in both cases.

Document IT102019000006698 shows a stirring unit of a machine for making liquid or semi-liquid food products, comprising: a first base element configured to rotate about a first axis of rotation and having a plurality of first mixing vanes, which define, in rotation, a substantially cylindrical operating surface, and a plurality of scraping appendages, which are connectable to the mixing vanes; a first actuator, connected to the base element to set it in rotation about the first axis of rotation, a second base element, configured to rotate about a second axis of rotation and having at least a second mixing vane; a processing container forming a processing chamber for processing a base product and in which the first base element and the second base element are mounted; a second actuator, connected to the second base element to set it in rotation about the axis of rotation, the first base element and the second base element being configured to rotate about the first axis of rotation and the second axis of rotation, respectively, independently of each other and the first actuator and the second actuator being configured to be activated independently of each other.

Document EP3222150A1 shows a machine for making liquid or semi-liquid products comprises: a container adapted to contain a liquid or semi-liquid base product; a thermal treatment system associated with the container to cool or heat the walls of the container; a stirrer equipped with a plurality of radial vanes and, in use, mounted inside the container to mix the liquid base product inside the container; the machine being characterized in that it further comprises a basket having a plurality of through openings on its walls, defining an internal space for containing flavourings or the like and, in use, mounted inside the container.

Document US2020/397017 discloses a stirrer of a machine for making liquid or semi-liquid products, including a rotary body which is housed coaxially in a batch freezer cylinder to rotate about its central axis and which is provided with a plurality of vanes each provided with at least one scraping member for scraping the cylindrical inside wall of the batch freezer cylinder. Each scraping member includes a blade and a supporting element for supporting the blade. Each blade has, on one side of it, a scraping profile, disposed substantially in contact with the cylindrical inside wall of the batch freezer cylinder and, on the opposite side of it, a coupling profile for coupling it to the respective supporting element and disposed along a longitudinal peripheral edge of the supporting element itself; a longitudinal groove is undercut along the aforementioned edge and the coupling profile is removably shape-fitted therein.

Document CN202590682 shows a stirrer used for dissolving tanks or mixing tanks of molten compound fertilizer production devices. The stirrer comprises an axle seat, a plurality of stirring blades are arranged on the periphery of the axle seat and are distributed in a radial shape; and a plurality of prongs extending upwards are arranged on the plurality of the stirring blades. The stirring blades are submerged in a slurry solution, and the plurality of the prongs are upward to be exposed on the slurry solution surface, so that the prongs scatter and mix suspension materials above the stirring blades in a stirring and mixing process, and the splattering situation of high-temperature slurries cannot happen.

The aim of this innovation is to meet the above-mentioned need, that is to say, to provide a stirrer capable of very effectively mixing not only liquid or semi-liquid mixtures but also products having a thicker consistency, such as creams or dessert products.

Another aim of this innovation is to provide a stirrer which is quick and easy to remove so as to ensure optimum cleaning.

A further aim of this innovation is to provide a machine which allows working with food products in a particularly efficient manner, be they liquid, semi-liquid or semi-solid.

The present invention is defined by the claims

The description refers to the accompanying drawings, which are also provided purely by way of non-limiting example and in which:

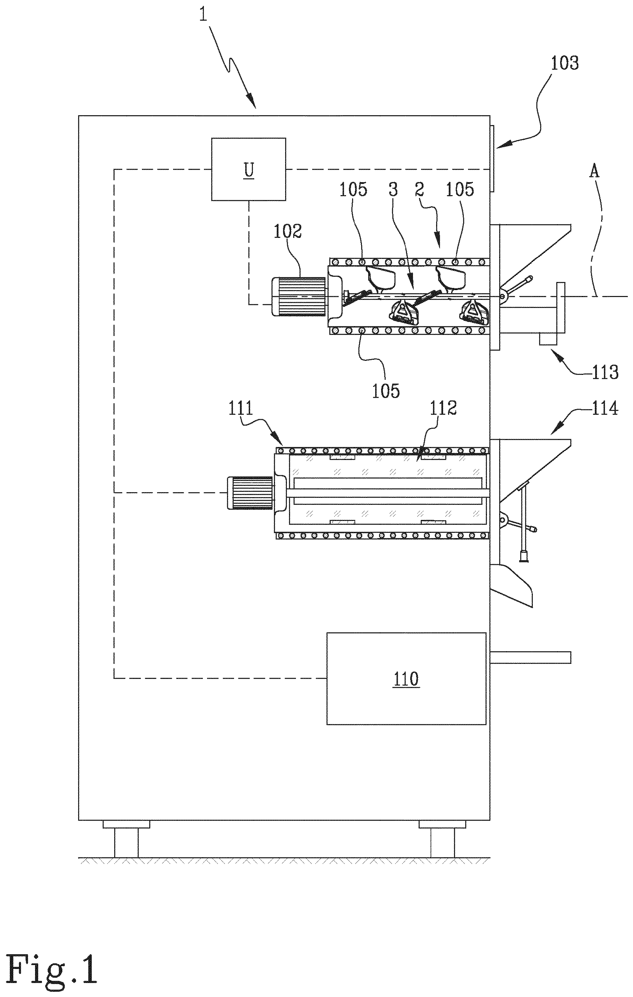

- Figure 1 shows a schematic side view of the machine according to this innovation;
- Figures 2 and 3 show respective perspective views of a stirrer forming part of the machine of Figure 1 in a first operating configuration;

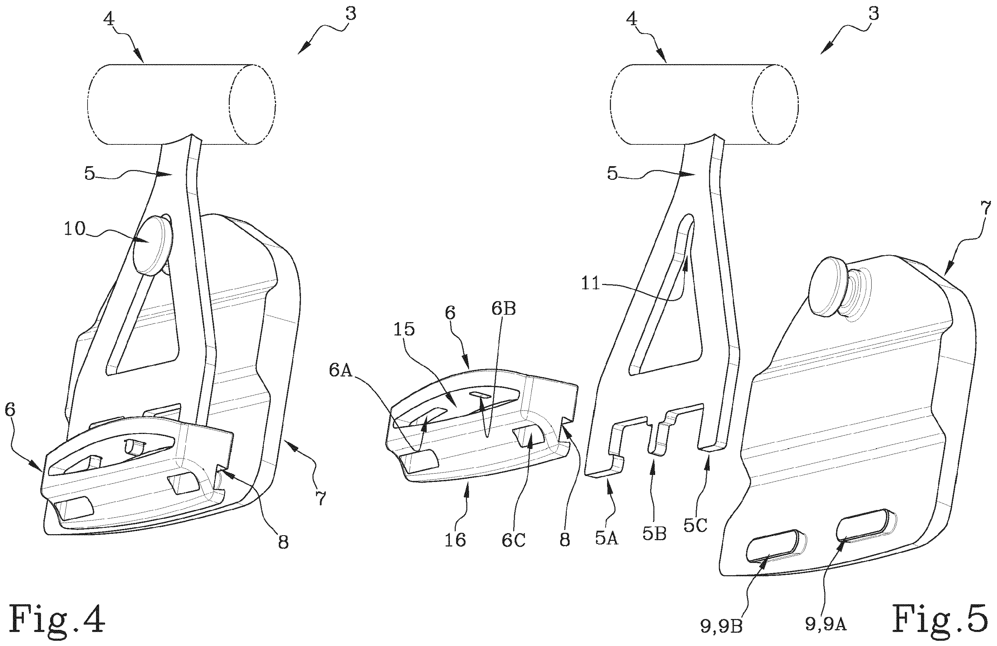

- Figures 4 and 5 show respective perspective views of a detail of the stirrer of Figures 2 and 3 in an assembled and a disassembled configuration, respectively;

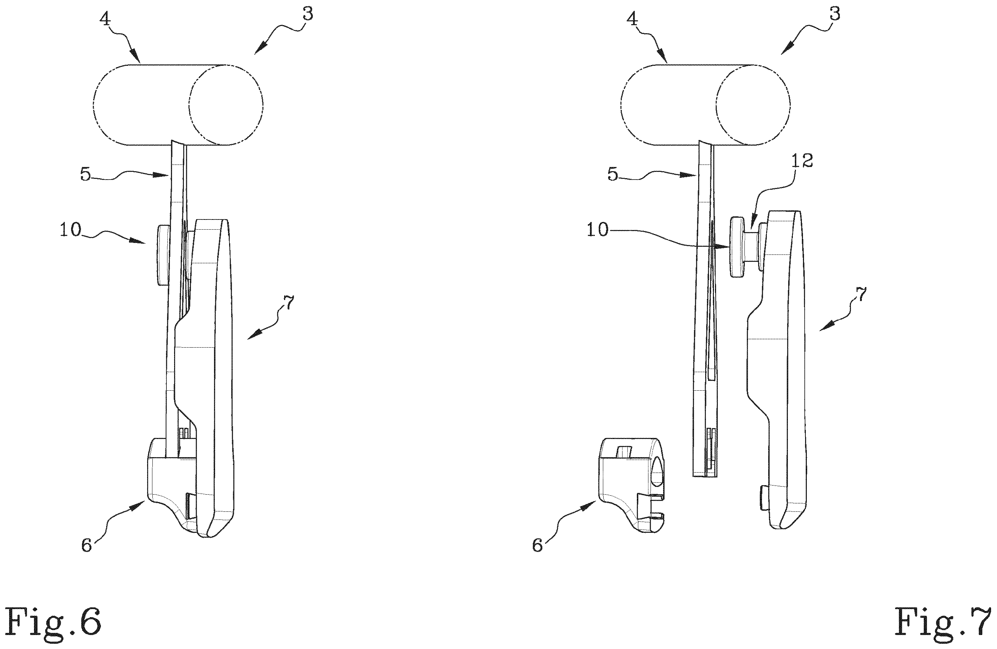

- Figures 6 and 7 show respective side views of a detail of the stirrer of Figures 2 and 3 in an assembled and a disassembled configuration, respectively;
- Figures 8 and 9 show respective perspective views of a stirrer forming part of the machine of Figure 1 in a second operating configuration;
- Figure 10 shows a perspective view of a detail of the stirrer of Figures 2 to 9.

With reference to the accompanying drawings, the reference numeral 1 denotes in its entirety a machine for processing food products, preferably liquid, or semi-liquid, or semi-solid, in particular for making (or treating) and dispensing the aforesaid products.

For example, the aforesaid food products may be creams, desserts, mixtures for ice cream or dessert products, jams or other similar products. According to the disclosure, the machine 1 for making and dispensing food products comprises at least one container 2, for containing the product to be processed.

The container 2 comprises lateral and bottom inside walls.

Preferably, the container 2 is a cylindrical container.

Still more preferably, the container 2 has a horizontal axis.

According to the disclosure, the machine 1 for making and dispensing food products comprises at least one stirrer 3, mounted inside the container 2. The present invention discloses a stirrer (3) for liquid, semi-liquid or semi-solid products, comprising at least the following, in combination:
- a central shaft (4);
- a plurality of radial supports (5), connected to the central shaft (4);
- a plurality of mixing and centring elements (6), each configured to be connected to a radial support (5) so as to define a first operating configuration (C1) for processing liquid or semi-liquid products;
- a plurality of vanes (7), each configured to be connected to a mixing and centring element (6) so as to define a second operating configuration (C2) for processing semi-solid products wherein each radial support (5) has at least one plurality of prongs (5A, 5B, 5C),
wherein each mixing and centring element (6) has a plurality of cavities (6A, 6B, 6C), each cavity (6A, 6B, 6C) being configured to receive one of the prongs (5A, 5B, 5C) so as to connect the mixing and centring element (6) to one of the radial supports (5) and wherein each mixing and centring element (6) has an elongate seat (8), and wherein each vane (7) comprises at least one protrusion (9) configured to be slotted into the elongate seat (8) so as to join the mixing and centring vane (7) to the radial support (5).

The stirrer 3 comprises a central shaft 4 rotating about an axis of rotation A.

The stirrer 3 further comprises a plurality of radial supports 5, connected to the central shaft 4.

Preferably, the radial supports 5 are made from a metallic material.

Preferably, the radial supports 5 are irremovably connected to the central shaft 4.

Still more preferably, the radial supports 5 are welded to the central shaft 4.

The stirrer 3 further comprises a plurality of mixing and centring elements 6, each configured to be connected to a radial support 5.

The stirrer 3 also comprises a plurality of mixing and centring vanes 7, each configured to be connected (removably) to a mixing and centring element 6.

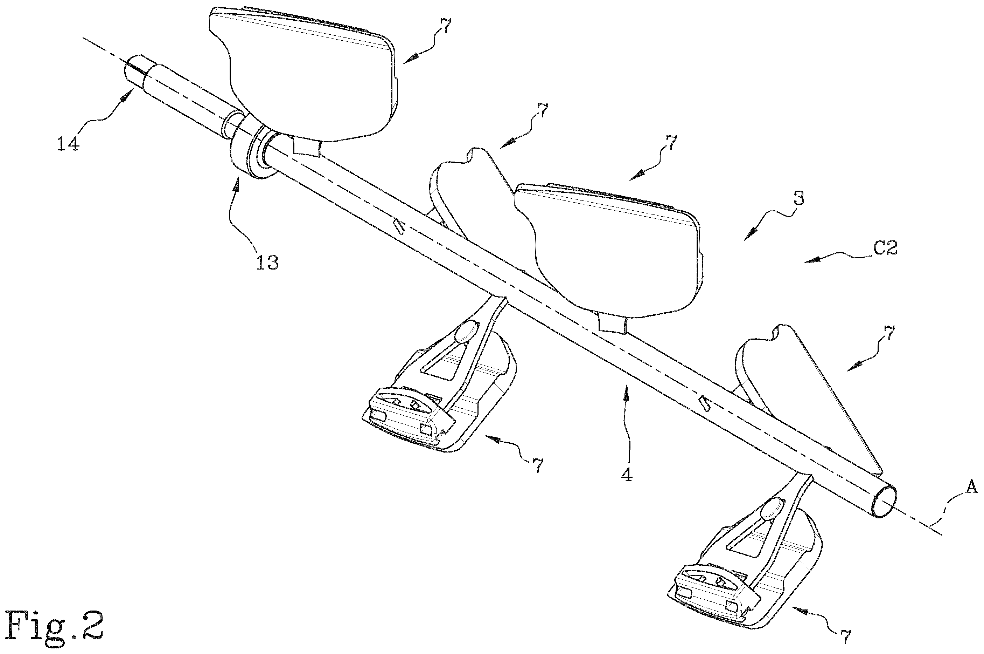

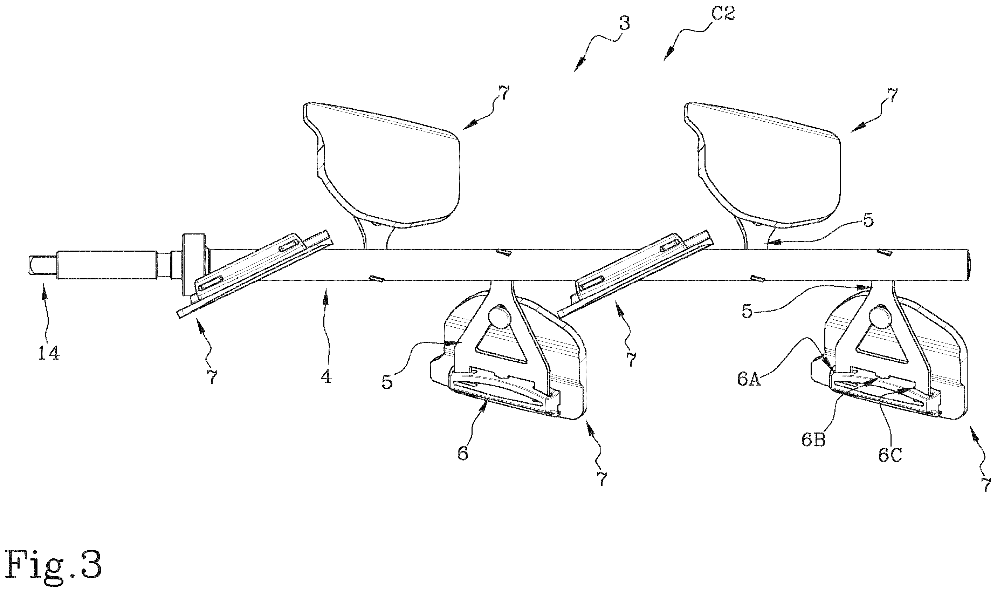

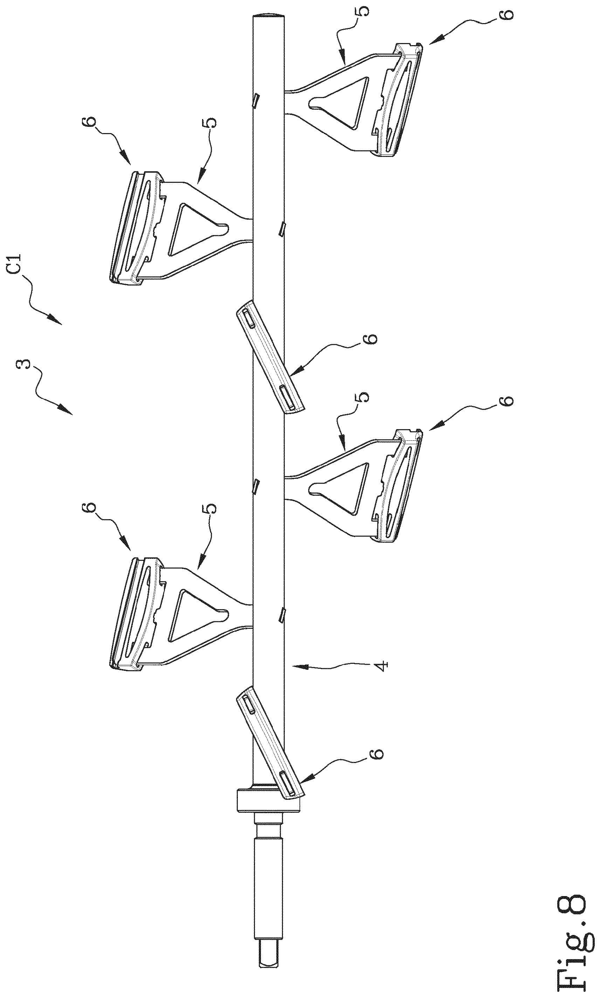

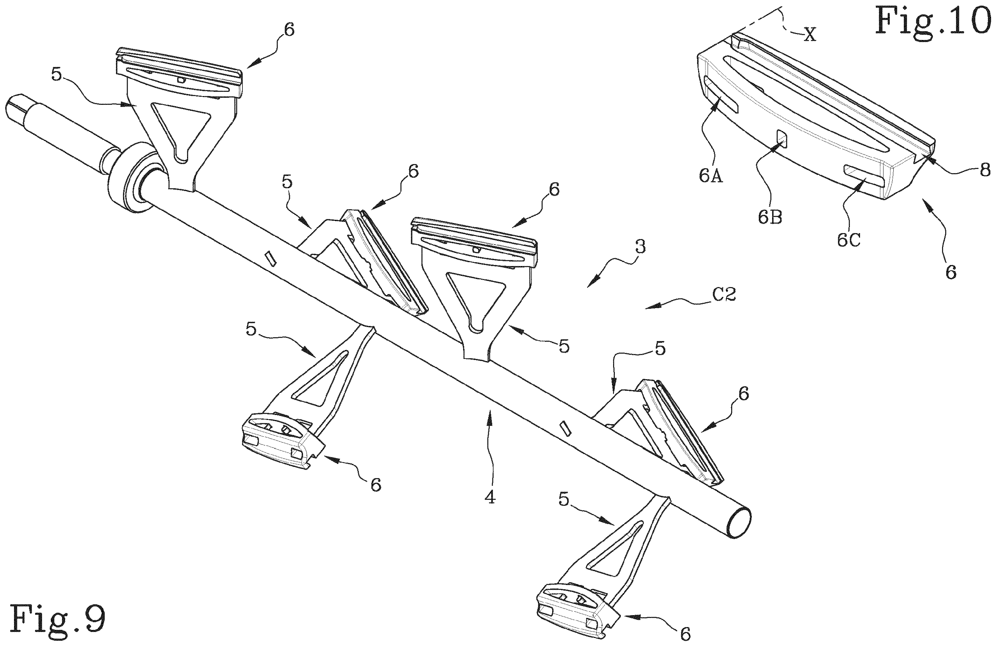

The stirrer 3 according to this invention can be assembled in two different configurations, a first configuration C1 (Figures 8 and 9) and a second configuration (Figures 2 and 3).

It should be noted that in the first configuration C1 (Figures 8 and 9), the mixing and centring elements 6 are each connected to a radial support 5.

Under these conditions, the stirrer 3 is composed only of the central shaft 4, the mixing and centring elements 6 and the radial supports 5.

It should be noted that the first configuration C1 is suitable for mixing predominantly liquid or semi-liquid products, that is, products whose main component is liquid, in particular mixtures for any ice cream or dessert products.

Such products basically consist of mixtures which are used for the production of finished products.

It should be noted that in the second configuration C2 (Figures 2 and 3), the vanes 7 are connected to the mixing and centring elements 6 (in the manner described in more detail below).

Each assembly composed of a vane 7 and a mixing and centring element 6 is then coupled to a radial support 5 by coupling the mixing and centring element 6 to a radial support 5.

In the second configuration C2 (Figures 2 and 3), the stirrer 3 is composed only of the central shaft 4, the mixing and centring elements 6, the vanes 7 and the radial supports 5.

It should be noted that the second configuration C2 is suitable for mixing predominantly thick (semi-solid) products such as, by way of non-limiting example: creams, desserts, icings, jellies, spreadable creams, jams, mousses, waffles, namelaka, toppings, blancmange, fruit coulis, fruit creams, crème anglaise, fruit sauce.

Each radial support 5 has at least one plurality of prongs 5A, 5B, 5C.

Each mixing and centring element 6 has a plurality of cavities 6A, 6B, 6C.

Each cavity 6A, 6B, 6C is configured to receive one of the prongs 5A, 5B, 5C within it.

According to yet another aspect, a first prong 5A of the plurality of prongs 5A, 5B, 5C is a lower lateral prong, a second prong 5B of the plurality of prongs 5A, 5B, 5C is an upper lateral prong, and a third prong 5C of the plurality of prongs 5A, 5B, 5C is a central prong.

According to another aspect, a first cavity 6A of the plurality of cavities 6A, 6B, 6C is a lower cavity configured to be coupled to the lower lateral prong 5A, a second cavity 6B of the plurality of cavities 6A, 6B, 6C is an upper cavity configured to be coupled to the upper lateral prong 5B, and a third cavity 6C of the plurality of cavities 6A, 6B, 6C is a central cavity configured to be coupled to the central prong 5C.

Each mixing and centring element 6 has an elongate seat 8, and each vane 7 comprises at least one protrusion 9 configured to be slotted into the seat 8 so as to join the mixing and centring vane 7 to the mixing and centring element 6.

Preferably, the seat 8 is parallelepipedal in shape.

According to another aspect, the protrusion 9 is parallelepipedal in shape. Preferably, the protrusion 9 has rounded edges on both sides (for easier insertion into the seat 8).

It should be noted that the protrusion 9 is inserted by sliding it into the seat 8.

Basically, the seat 8 is open at least at one end of it to allow the protrusion 9 to be slidably inserted into it, thereby coupling the vane 7 and the mixing and centring element 6 to each other.

Once the vane 7 and the mixing and centring element 6 have been coupled, they define the aforesaid assembly, composed of vane 7 and mixing and centring element 6, which can be coupled to the radial support 5 to define the second operating configuration of the stirrer 3.

According to another aspect, each vane 7 comprises a plurality of protrusions 9, configured to be inserted into the seat 8 to couple the mixing and centring vane to the radial supporting element 5.

More preferably, as illustrated in the accompanying drawings, each vane 7 comprises a first protrusion 9A of the plurality of protrusions 9 and a second protrusion 9B of the plurality of protrusions 9.

Insertion of the first and the second protrusion 9A, 9B into the seat 8 is carried out as described above, by sliding.

According to another aspect, the mixing and centring element 6 is also provided with a recess 15; the recess 15 is shaped to ensure that the edge portion 16 of the mixing and centring element which, in use, abuts against the surface of the container 2, has the necessary elastic compliance.

Basically, thanks to the presence of the recess, the mixing and centring element 6 is elastically compliant along the direction X.

That way, the mixing and centring element 6 acts in substantially the same way as a spring, along the direction X, that is to say, it is capable of elastically deforming, accumulating elastic energy, and then returning to the original position.

This allows the stirrer 3 to be perfectly centred in the internal cylindrical space defined by the container 2.

It should be noted that the mixing and centring element 6 has a twofold function: when the stirrer 3 is in the first configuration C1, it acts as a mixing and centring element in conjunction with the radial supports 5.

The mixing and centring element 6 also allows centring the stirrer 3 relative to the walls of the container 2: in effect, since the central shaft 4 is quite long, the mixing and centring element 6 is in contact with the walls of the container 3 and allows substantially aligning the axis of the central shaft 4 with the axis of the container 2.

In particular, the edge 16 of the mixing and centring element 6 is in contact with the walls of the container 2.

It should also be noted that the vanes 7 are preferably disposed longitudinally along the container 2 and oriented in such a way that they at least partly overlap as they operate during the rotation of the shaft 4. In other words, the zone covered by the rotation of one vane 7 at least partly intersects the zone covered by the rotation of another vane 7, adjacent to it.

According to yet another aspect, each radial support 5 comprises a receiving slot 11, and each vane 7 comprises a coupling pin 10 configured to be inserted into the receiving slot 11 to be coupled thereto.

Preferably, the coupling pin 10 is cylindrical in shape.

According to another aspect, the coupling pin 10 comprises a (radial) groove 12, configured to be coupled to the walls of the receiving slot 11 of the radial support 5.

According to yet another aspect, the central shaft 4 and radial supports 5 are made from a first, metallic material, and the mixing and centring elements 6 and vanes 7 are made from a second material, which is different from the first material and which is not metallic (preferably plastic material).

It should be noted that the fact that the second material is a plastic material, such as ABS, polyethylene, etc., advantageously allows eliminating wear on the walls of the container 2.

In effect, the walls of the container 2 are made from a metallic material.

According to yet another aspect, the stirrer 3 comprises a sing 13, connected to the central shaft 4.

Preferably, the ring 13 defines a point of contact wih the bottom wall of the container 2.

According to yet another aspect, at least some of the vanes 7 lie substantially in parallel planes.

More preferably, the vanes 7 lie in parallel planes in pairs.

According to yet another aspect, the central shaft 4 extends along a main direction of extension A and the radial supports 5 are connected to the central shaft 4 at different positions relative to the main direction of extension A.

The present invention also discloses a machine (1) for processing liquid or semi-liquid food products, comprising:
- at least one container (2) for containing the product to be processed;
- a stirrer (3) according to any one of the claims 1-9, disposed inside the container (2);
- a thermal system (110), operatively connected to the container (2) to heat the walls thereof.

According to an aspect of this disclosure, the machine 1 comprises a motor 102, connected to the central shaft 4 of the stirrer 3 to set the stirrer 3 (more precisely, the central shaft 4) in rotation about the axis of rotation A.

More precisely, the central shaft 4 comprises a portion 14 having a non-circular shape, configured to be coupled to the motor 102.

According to another aspect of this disclosure, the machine 1 comprises thermal treatment means 110.

Preferably, the thermal treatment means 110 are configured to heat the product inside the container 2.

Preferably, the thermal treatment means 110 are configured to heat the product inside the container 2 to a temperature of between 40°C and 85°C.

The thermal treatment means 110 are associated with the container 2 to thermally treat the product contained therein.

According to an aspect, the thermal treatment means 110 comprise at least one thermodynamic system (illustrated schematically in the accompanying drawings).

The thermodynamic system comprises a closed circuit configured to cause a heat exchanger fluid to circulate therein.

It should be noted that the structure and mechanics of the stirrer 3 in the first operating configuration C1 allows the product being processed in the machine 1 to be effectively mixed and blended while it is being heated.

In effect, in particular, heating could cause the product being processed to be overheated at the points where the product adheres to the inside walls of the container 2. It is therefore necessary to prevent the product from sticking to the walls of the container 2 in any way.

According to a further aspect of this disclosure, the machine 1 comprises a control unit U.

The control unit U is configured to drive the motor 102 and/or to control the thermal treatment means 110.

In an embodiment, the machine 1 comprises an interface 103 which is operatively connected to the control unit U and is configured to allow interaction with a user.

Preferably, the machine 1 comprises a dispenser 113, connected to the container 2 which contains the product to be processed to allow extracting the product to be processed.

The dispenser 113 preferably comprises a control lever, configured to open or close a duct which is in communication with the interior of the container 2.

According to another aspect, the machine 1 comprises an additional container 111 and an additional stirrer 112 disposed inside the additional container 111.

Preferably, the additional container 111 is configured to cool the product being processed.

In this sense, the additional container 111 is connected to the thermal treatment means 110 to allow the product inside the container 111 to be cooled while it is being stirred by the additional stirrer 112.

Preferably, the thermal treatment means 110 are configured to cool the product inside the additional container 111 to a temperature of between 0°C and -15°C, more preferably between -3°C and -10°C.

It should be noted that the additional container 111 advantageously allows making ice cream products, for example, gelati or cold dessert products.

In this sense, the base product may be pre-treated, for example pasteurized, in the container 2, then extracted with the dispenser 113 and fed to the container 111, through the hopper 114, to be processed therein.

Also defined is a method for processing liquid, semi-liquid or semi-solid products by means of a stirrer 3 according to what is described in the foregoing, comprising the following steps:
- preparing a stirrer 3 as described in the foregoing;
- preparing a processing container 2; and alternatively:
- if the product is a liquid or semi-liquid product, coupling each mixing and centring element 6 to a radial support 5 (of the radial supports 5) so as to define the first operating configuration C1 of the stirrer 3;
- if the product is a semi-solid product:
   - coupling each vane 7 to a mixing and centring element 6 so as to define an assembly composed of vane 7 and mixing and centring element 6;
   - and coupling to a radial support 5 each assembly made up of a vane 7 and a mixing and centring element 6 coupled to each other to define a second operating configuration C2 of the stirrer 3;
- mounting the stirrer 3 in the container 2 according to the first operating configuration C1 or the second operating configuration C2;
- setting the central shaft 4 in rotation to process the product inside the container 2 and simultaneously thermally treating, preferably heating, the walls of the container 2.

Advantageously, according to the invention, it is possible to have a single stirrer 3, that is to say, to assemble the stirrer extremely easily and flexibly based on the product being processed.

This advantageously allows using a single central shaft 4 and being able to configure the shaft in the first or the second configuration (C1, C2) based on the product being processed.

Advantageously, fitting and removing the different parts on the radial supports 5 is extremely easy, thanks to the coupling features described in the foregoing.

Thus, cleaning and maintenance of the stirrer 3 is made extremely easy.

Moreover, thanks to the mixing and centring elements 6, the central shaft 4 can be centred in the container 2 very efficiently and wear due to the rotation of the stirrer 3 is greatly reduced.

## Claims

1. A stirrer (3) for liquid, semi-liquid or semi-solid products, comprising at least the following, in combination:
- a central shaft (4);
- a plurality of radial supports (5), connected to the central shaft (4);
- a plurality of mixing and centring elements (6), each configured to be connected to a radial support (5) so as to define a first operating configuration (C1) for processing liquid or semi-liquid products;
- a plurality of vanes (7), each configured to be connected to a mixing and centring element (6) so as to define a second operating configuration (C2) for processing semi-solid products
wherein each radial support (5) has at least one plurality of prongs (5A, 5B, 5C).
wherein each mixing and centring element (6) has a plurality of cavities (6A, 6B, 6C), each cavity (6A, 6B, 6C) being configured to receive one of the prongs (5A, 5B, 5C) so as to connect the mixing and centring element (6) to one of the radial supports (5) and wherein each mixing and centring element (6) has an elongate seat (8), and wherein each vane (7) comprises at least one protrusion (9) configured to be slotted into the elongate seat (8) so as to join the mixing and centring vane (7) to the radial support (5).

2. The stirrer (3) according to claim 1, wherein a first prong (5A) of the plurality of prongs (5A, 5C, 5B) is a lower lateral prong, a second prong (5C) of the plurality of prongs (5A, 5B, 5C) is an upper lateral prong, and a third prong (5C) of the plurality of prongs (5A, 5B, 5C) is a central prong, and wherein a first cavity (6A) of the plurality of cavities (6A, 6C, 6B) is a lower cavity configured to be coupled to the lower lateral prong (5A), a second cavity (6B) of the plurality of cavities (6A, 6B, 6C) is an upper cavity configured to be coupled to the upper lateral prong (5B), and a third cavity (6C) of the plurality of cavities (6A, 6B, 6C) is a central cavity configured to be coupled to the central prong (5C).

3. The stirrer (3) according to the preceding claim, wherein each mixing and centring element (6) has an elongate seat (8) and wherein each vane (7) comprises a plurality of protrusions (9A, 9B) configured to be slotted into the elongate seat (8) so as to join the mixing and centring vane (7) to the radial support (5).

4. The stirrer (3) according to any one of the preceding claims, wherein each radial support (5) comprises a receiving slot (11), and wherein each vane (7) comprises a coupling pin (10) configured to be inserted into the receiving slot (11) to be coupled thereto.

5. The stirrer (3) according to the preceding claim, wherein the coupling pin (10) comprises a groove (12), configured to be coupled to the walls of the receiving slot (11) of the radial support (5).

6. The stirrer (3) according to any one of the preceding claims, wherein the central shaft (4) and radial supports (5) are made from a first, metallic material, and the mixing and centring elements (6) and vanes (7) are made from a second material, which is different from the first material and which is not metallic.

7. The stirrer (3) according to any one of the preceding claims, wherein the stirrer (3) comprises a ring (13) integrally connected to the central shaft (4).

8. The stirrer (3) according to any one of the preceding claims, wherein at least some of the vanes (7) lie substantially in parallel planes.

9. The stirrer (3) according to any one of the preceding claims, wherein the central shaft (4) extends along a main direction of extension (A) and wherein the radial supports (5) are connected to the central shaft (4) at different positions relative to the main direction of extension (A).

10. A machine (1) for processing liquid or semi-liquid food products, comprising:
- at least one container (2) for containing the product to be processed;
- a stirrer (3) according to any one of the preceding claims, disposed inside the container (2);
- a thermal system (110), operatively connected to the container (2) to heat the walls thereof.

11. The machine (1) according to the preceding claim, further comprising a dispenser (113), connected to the container (2) containing the product to be processed to allow the product to be processed to be extracted.

12. The machine (1) according to claim 11 or 12, comprising an additional container (111) and an additional stirrer (112) disposed inside the additional container (111).

13. A method for processing liquid, semi-liquid or semi-solid products by means of a stirrer (3) according to any one of claims 1 to 9, comprising the following steps:
- preparing a stirrer according to any one of claims 1 to 9;
- preparing a processing container (2); and alternatively:
- if the product is a liquid or semi-liquid product, coupling each mixing and centring element (6) to a radial support (5) so as to define the first operating configuration (C1);
- if the product is a semi-solid product:
- coupling each vane (7) to a mixing and centring element (6);
- and coupling to a radial support (5) each assembly made up of a vane (7) and a mixing and centring element (6) coupled to each other to define a second operating configuration (C2);
- mounting the stirrer (3) in the container (2) according to the first operating configuration (C1) or the second operating configuration (C2);
- setting the central shaft (4) in rotation to process the product and simultaneously thermally treating, preferably heating, the walls of the container (2).

## Patentansprüche

1. Rührer (3) für flüssige, halbflüssige oder halbfeste Produkte, umfassend in Kombination mindestens Folgendes:
- eine mittlere Welle (4);
- eine Vielzahl von radialen Stützen (5), die mit der mittleren Welle (4) verbunden sind;
- eine Vielzahl von Misch- und Zentrierelementen (6), die jeweils ausgelegt sind, um mit einer radialen Stütze (5) verbunden zu werden, sodass eine erste Betriebsauslegung (C1) zur Verarbeitung von flüssigen oder halbflüssigen Produkten definiert wird;
- eine Vielzahl von Flügeln (7), die jeweils ausgelegt sind, um mit einem Misch- und Zentrierelement (6) verbunden zu werden, sodass eine zweite Betriebsauslegung (C2) zur Verarbeitung von halbflüssigen Produkten definiert wird,
wobei eine jede radiale Stütze (5) mindestens eine Vielzahl von Zinken (5A, 5B, 5C) aufweist,
wobei ein jedes Misch- und Zentrierelement (6) eine Vielzahl von Hohlräumen (6A, 6B, 6C) aufweist, wobei ein jeder Hohlraum (6A, 6B, 6C) ausgelegt ist, um einen der Zinken (5A, 5B, 5C) aufzunehmen, sodass das Misch- und Zentrierelement (6) mit einer der radialen Stützen (5) verbunden wird, und wobei ein jedes Misch- und Zentrierelement (6) einen langgestreckten Sitz (8) aufweist, und wobei ein jeder Flügel (7) mindestens einen Vorsprung (9) umfasst, der ausgelegt ist, um in den langgestreckten Sitz (8) eingesteckt zu werden, sodass der Misch- und Zentrierflügel (7) mit der radialen Stütze (5) zusammengefügt wird.

2. Rührer (3) nach Anspruch 1, wobei einen erster Zinken (5A) der Vielzahl von Zinken (5A, 5C, 5B) ein unterer seitlicher Zinken ist, ein zweiter Zinken (5C) der Vielzahl von Zinken (5A, 5B, 5C) ein oberer seitlicher Zinken ist und ein dritter Zinken (5C) der Vielzahl von Zinken (5A, 5B, 5C) ein mittlerer Zinken ist, und wobei ein erster Hohlraum (6A) der Vielzahl von Hohlräumen (6A, 6C, 6B) ein unterer Hohlraum ist, der ausgelegt ist, um mit dem unteren seitlichen Zinken (5A) gekoppelt zu werden, ein zweiter Hohlraum (6B) der Vielzahl von Hohlräumen (6A, 6B, 6C) ein oberer Hohlraum ist, der ausgelegt ist, um mit dem oberen seitlichen Zinken (5B) gekoppelt zu werden, und ein dritter Hohlraum (6C) der Vielzahl von Hohlräumen (6A, 6B, 6C) ein mittlerer Hohlraum ist, der ausgelegt ist, um mit dem seitlichen Zinken (5C) gekoppelt zu werden.

3. Rührer (3) nach dem vorhergehenden Anspruch, wobei ein jedes Misch- und Zentrierelement (6) einen langgestreckten Sitz (8) aufweist und wobei ein jeder Flügel (7) eine Vielzahl von Vorsprüngen (9A, 9B) umfasst, die ausgelegt sind, um in den langgestreckten Sitz (8) eingesteckt zu werden, sodass der Misch- und Zentrierflügel (7) mit der radialen Stütze (5) zusammengefügt wird.

4. Rührer (3) nach einem der vorhergehenden Ansprüche, wobei eine jede radiale Stütze (5) einen Aufnahmeschlitz (11) umfasst, und wobei ein jeder Flügel (7) einen Kupplungszapfen (10) umfasst, der ausgelegt ist, um in den Aufnahmeschlitz (11) eingefügt zu werden, um mit diesem gekoppelt zu werden.

5. Rührer (3) nach dem vorhergehenden Anspruch, wobei der Kupplungszapfen (10) eine Nut (12) umfasst, die ausgelegt ist, um mit den Wänden des Aufnahmeschlitzes (11) der radialen Stütze (5) gekoppelt zu werden.

6. Rührer (3) nach einem der vorhergehenden Ansprüche, wobei die mittlere Welle (4) und die radialen Stützen (5) aus einem ersten Metallmaterial bestehen und die Misch- und Zentrierelemente (6) und Flügel (7) aus einem zweiten Material bestehen, das sich vom ersten Material unterscheidet und nicht metallisch ist.

7. Rührer (3) nach einem der vorhergehenden Ansprüche, wobei der Rührer (3) einen Ring (13) umfasst, der in einem Stück mit der mittleren Welle (4) verbunden ist.

8. Rührer (3) nach einem der vorhergehenden Ansprüche, wobei mindestens einige der Flügel (7) im Wesentlichen in parallelen Ebenen liegen.

9. Rührer (3) nach einem der vorhergehenden Ansprüche, wobei sich die mittlere Welle (4) entlang einer Haupterstreckungsrichtung (A) erstreckt und wobei die radialen Stützen (5) mit der mittleren Welle (4) an unterschiedlichen Positionen relativ zur Haupterstreckungsrichtung (A) verbunden sind.

10. Maschine (1) zur Verarbeitung von flüssigen oder halbflüssigen Lebensmittelprodukten, umfassend:
- mindestens einen Behälter (2) zum Enthalten des zu verarbeitenden Produkts;
- einen Rührer (3) nach einem der vorhergehenden Ansprüche, der im Behälter (2) angeordnet ist;
- ein thermisches System (110), das betriebswirksam mit dem Behälter (2) verbunden ist, um dessen Wände zu erwärmen.

11. Maschine (1) nach dem vorhergehenden Anspruch, zudem umfassend eine Ausgabevorrichtung (113), die mit dem Behälter (2), der das zu verarbeitende Produkt enthält, verbunden ist, um zu erlauben, dass das zu verarbeitende Produkt extrahiert wird.

12. Maschine (1) nach Anspruch 11 oder 12, umfassend einen zusätzlichen Behälter (111) und einen zusätzlichen Rührer (112), der im zusätzlichen Behälter (111) angeordnet ist.

13. Verfahren zur Verarbeitung von flüssigen, halbflüssigen oder halbfesten Produkten mittels eines Rührers (3) nach einem der Ansprüche 1 bis 9, umfassend die folgenden Schritte:
- Vorbereiten eines Rührers nach einem der Ansprüche 1 bis 9;
- Vorbereiten eines Verarbeitungsbehälters (2); und wahlweise:
- Koppeln eines jeden Misch- und Zentrierelements (6) mit einer radialen Stütze (5), sodass die erste Betriebsauslegung (C1) definiert wird, wenn das Produkt ein flüssiges oder halbflüssiges Produkt ist;
- wenn das Produkt ein halbfestes Produkt ist:
- Koppeln eines jeden Flügels (7) mit einem Misch- und Zentrierelement (6);
- und Koppeln einer jeden Anordnung, bestehend aus einem Flügel (7) und einem Misch- und Zentrierelement (6), die miteinander gekoppelt sind, mit einer radialen Stütze (5), um eine zweite Betriebsauslegung (C2) zu definieren;
- Montieren des Rührers (3) im Behälter (2) nach der ersten Betriebsauslegung (C1) oder der zweiten Betriebsauslegung (C2);
- Versetzen der mittleren Welle (4) in Drehung, um das Produkt zu verarbeiten, und gleichzeitiges thermisches Behandeln, vorzugsweise Erwärmen, der Wände des Behälters (2).

## Revendications

1. Agitateur (3) pour produits liquides, semi-liquides ou semi-solides, comprenant au moins ce qui suit, en combinaison :
- un arbre central (4) ;
- une pluralité de supports radiaux (5), reliés à l'arbre central (4) ;
- une pluralité d'éléments de mélange et de centrage (6), chacun configuré pour être relié à un support radial (5) de manière à définir une première configuration de fonctionnement (C1) pour traiter des produits liquides ou semi-liquides ;
- une pluralité de pales (7), chacune configurée pour être reliée à un élément de mélange et de centrage (6) de manière à définir une deuxième configuration de fonctionnement (C2) pour traiter des produits semi-solides, dans lequel chaque support radial (5) possède au moins une pluralité de broches (5A, 5B, 5C),
dans lequel chaque élément de mélange et de centrage (6) a une pluralité de cavités (6A, 6B, 6C), chaque cavité (6A, 6B, 6C) étant configurée pour recevoir l'une des broches (5A, 5B, 5C) de manière à relier l'élément de mélange et de centrage (6) à l'un des supports radiaux (5) et dans lequel chaque élément de mélange et de centrage (6) a un siège allongé (8), et dans lequel chaque pale (7) comprend au moins une saillie (9) configurée pour être fendue dans le siège allongé (8) de manière à joindre la pale de mélange et de centrage (7) au support radial (5).

2. Agitateur (3) selon la revendication 1, dans lequel une première broche (5A) de la pluralité de broches (5A, 5C, 5B) est une broche latérale inférieure, une deuxième broche (5C) de la pluralité de broches (5A, 5B, 5C) est une broche latérale supérieure, et une troisième broche (5C) de la pluralité de broches (5A, 5B, 5C) est une broche centrale, et dans lequel une première cavité (6A) de la pluralité de cavités (6A, 6C, 6B) est une cavité inférieure configurée pour être couplée à la broche latérale inférieure (5A), une deuxième cavité (6B) de la pluralité de cavités (6A, 6B, 6C) est une cavité supérieure configurée pour être couplée à la broche latérale supérieure (5B), et une troisième cavité (6C) de la pluralité de cavités (6A, 6B, 6C) est une cavité centrale configurée pour être couplée à la broche centrale (5C).

3. Agitateur (3) selon la revendication précédente, dans lequel chaque élément de mélange et de centrage (6) a un siège allongé (8) et dans lequel chaque pale (7) comprend une pluralité de saillies (9A, 9B) configurées pour être fendues dans le siège allongé (8) de manière à joindre la pale de mélange et de centrage (7) au support radial (5).

4. Agitateur (3) selon l'une quelconque des revendications précédentes, dans lequel chaque support radial (5) comprend une fente de réception (11), et dans lequel chaque pale (7) comprend une broche de couplage (10) configurée pour être insérée dans la fente de réception (11) pour y être couplée.

5. Agitateur (3) selon la revendication précédente, dans lequel la broche de couplage (10) comprend une rainure (12), configurée pour être couplée aux parois de la fente de réception (11) du support radial (5).

6. Agitateur (3) selon l'une quelconque des revendications précédentes, dans lequel l'arbre central (4) et les supports radiaux (5) sont fabriqués à partir d'un premier matériau métallique, et les éléments de mélange et de centrage (6) et les pales (7) sont fabriqués à partir d'un second matériau, qui est différent du premier matériau et qui n'est pas métallique.

7. Agitateur (3) selon l'une quelconque des revendications précédentes, dans lequel l'agitateur (3) comprend un anneau (13) intégralement relié à l'arbre central (4).

8. Agitateur (3) selon l'une quelconque des revendications précédentes, dans lequel au moins certaines des pales (7) se trouvent sensiblement dans des plans parallèles.

9. Agitateur (3) selon l'une quelconque des revendications précédentes, dans lequel l'arbre central (4) s'étend le long d'une direction principale d'extension (A) et dans lequel les supports radiaux (5) sont reliés à l'arbre central (4) dans différentes positions par rapport à la direction principale d'extension (A).

10. Machine (1) pour traiter des produits alimentaires liquides ou semi-liquides, comprenant :
- au moins un récipient (2) pour contenir le produit à traiter ;
- un agitateur (3) selon l'une quelconque des revendications précédentes, disposé à l'intérieur du récipient (2) ;
- un système thermique (110), fonctionnellement relié au récipient (2) pour chauffer les parois de celui-ci.

11. Machine (1) selon la revendication précédente, comprenant en outre un distributeur (113), relié au récipient (2) contenant le produit à traiter pour permettre au produit à traiter d'être extrait.

12. Machine (1) selon la revendication 11 ou 12, comprenant un récipient supplémentaire (111) et un agitateur supplémentaire (112) disposé à l'intérieur du récipient supplémentaire (111).

13. Procédé de traitement de produits liquides, semi-liquides ou semi-solides au moyen d'un agitateur (3) selon l'une quelconque des revendications 1 à 9, comprenant les étapes suivantes :
- préparer un agitateur selon l'une quelconque des revendications 1 à 9 ;
- préparer un récipient de traitement (2) ; et alternativement :
- si le produit est un produit liquide ou semi-liquide, coupler chaque élément de mélange et de centrage (6) à un support radial (5) de manière à définir la première configuration de fonctionnement (C1) ;
- si le produit est un produit semi-solide :
- coupler chaque pale (7) à un élément de mélange et de centrage (6) ;
- et coupler à un support radial (5) chaque ensemble constitué d'une pale (7) et d'un élément de mélange et de centrage (6) couplés l'un à l'autre pour définir une deuxième configuration de fonctionnement (C2) ;
- monter l'agitateur (3) dans le récipient (2) selon la première configuration de fonctionnement (C1) ou la deuxième configuration de fonctionnement (C2) ;
- mettre l'arbre central (4) en rotation pour traiter le produit et simultanément traiter thermiquement, de préférence chauffer, les parois du récipient (2).
